# EUROPÄISCHE PATENTANMELDUNG

(11) **EP 1 769 994 A2**
(43) Veröffentlichungstag der Anmeldung: **04.04.2007**
(21) Anmeldenummer: 06119836.2
(22) Anmeldetag: 30.08.2006
(51) Int. Cl.: B61L 3/12, B61L 3/22

(54) **Schienenfahrzeug mit zumindest einer Antenne**

(30) Priorität: 23.09.2005 DE 102005045611
(71) Anmelder: SIEMENS AKTIENGESELLSCHAFT, 80333 München (DE)
(72) Erfinder: Baumgarte, Heinz-Peter, 91083 Baiersdorf (DE); Fuchs, Gerhard, 8410 Wildon (AT); Seume, Ines, 47918 Tönisvorst (DE); Tobler, Michael, 8304 Wallisellen (CH); Vogel, Andreas, 91336 Heroldsbach (DE)

(57) **Zusammenfassung**

Die Erfindung bezieht sich auf ein Schienenfahrzeug (10) mit zumindest einer Antenne zum Senden von Datensignalen einer vorgegebenen Norm an eine Streckeneinrichtung und/oder zum Empfangen von Datensignalen einer vorgegebenen Norm von einer Streckeneinrichtung, wobei das Schienenfahrzeug mindestens ein Drehgestell (50) aufweist.

Der Erfindung liegt die Aufgabe zugrunde, für ein Schienenfahrzeug eine Antennenpositionierung anzugeben, die sich universell einsetzen lässt und die auch für Doppelstock-Schienenfahrzeuge geeignet ist.

Diese Aufgabe wird erfindungsgemäß dadurch gelöst, dass alle Antennen (80, 90, 100, 110) des Schienenfahrzeugs (10) am und/oder vor dem vorderen Drehgestell (50) angeordnet sind.

## Beschreibung

Die Erfindung bezieht sich auf ein Schienenfahrzeug mit zumindest einer Antenne zum Senden von Datensignalen einer vorgegebenen Norm an eine Streckeneinrichtung und/oder zum Empfangen von Datensignalen einer vorgegebenen Norm von einer Streckeneinrichtung, wobei das Schienenfahrzeug mindestens ein Drehgestell aufweist.

Unter dem Begriff "Schienenfahrzeug" werden sowohl angetriebene als auch antriebslose Schienenfahrzeuge verstanden, beispielsweise also auch Triebfahrzeuge oder Steuerwagen.

Bekanntermaßen sind Triebfahrzeuge eines Eisenbahnzugs mit Antennen ausgestattet, die eine Kommunikation zwischen dem Triebfahrzeug und einer streckenseitigen Einrichtung (Streckeneinrichtung), wie beispielsweise einem Stellwerk oder einer Leitzentrale, ermöglichen. Über die Antennen werden beispielsweise Datensignale zum Zwecke der Zugsicherung übertragen.

Der Erfindung liegt die Aufgabe zugrunde, für ein Schienenfahrzeug eine Antennenpositionierung anzugeben, die sich universell einsetzen lässt und die auch für Doppelstock-Schienenfahrzeuge geeignet ist.

Diese Aufgabe wird ausgehend von einem Schienenfahrzeug der eingangs angegebenen Art erfindungsgemäß durch die kennzeichnenden Merkmale des Anspruchs 1 gelöst. Vorteilhafte Ausgestaltungen des erfindungsgemäßen Schienenfahrzeugs sind in Unteransprüchen angegeben.

Danach ist erfindungsgemäß vorgesehen, dass alle Antennen des Schienenfahrzeugs am und/oder vor dem vorderen Drehgestell angeordnet sind. Mit anderen Worten liegt also keine Antenne hinter dem vorderen Drehgestell; es sollen also alle Antennen am vorderen Drehgestell oder vor dem vorderen Drehgestell oder am und vor dem vorderen Drehgestell befestigt sein. Unter einer Montage "vor" dem vorderen Drehgestell ist dabei zu verstehen, dass die jeweilige Antenne im Bereich zwischen dem vorderen Drehgestell und der Frontseite des Fahrzeugs am Wagenkasten angebracht wird.

Ein wesentlicher Vorteil der Erfindung ist darin zu sehen, dass die angegebene Positionierung der Antennen bei allen Fahrzeugtypen und somit insbesondere auch bei Doppelstock-Schienenfahrzeugen ohne weiteres eingesetzt werden kann. Beispielsweise tritt bei Doppelstock-Schienenfahrzeugen das Problem auf, dass der Wagenboden des Fahrzeugs sehr tief liegt und im Bereich des Wagenbodens die verbleibende Bauhöhe zur Montage der Antennen sehr gering ist. An dieser Stelle setzt die Erfindung an, indem erfindungsgemäß vorgesehen wird, dass alle Antennen des Schienenfahrzeuges im vorderen Bereich, also am vorderen Drehgestell und/oder davor montiert werden. Die Drehgestelle weisen nämlich bei Schienenfahrzeugen unabhängig davon, ob diese ein- oder zweistöckig sind, annähernd dieselbe Bauhöhe auf, so dass an und vor dem Drehgestell eine Antennenpositionierung weitgehend fahrzeugtypunabhängig möglich ist.

Ein weiterer wesentlicher Vorteil der Erfindung ist darin zu sehen, dass bei Doppelstock-Schienenfahrzeugen aufgrund der Antennenpositionierung außerhalb des tief liegenden Bereichs des Wagenbodens eine große Stehhöhe für die Passagiere im Wagenkasten beibehalten werden kann; denn konstruktive Maßnahmen im Bereich des tief liegenden Teils des Wagenbodens sind im Hinblick auf die Antennenpositionierung nicht erforderlich.

Ein dritter wesentlicher Vorteil der Erfindung besteht darin, dass der Wagenkasten seine übliche einfache, leichte und stabile Konstruktion beibehalten kann, da - wie erläutert - die Antennen keine Modifikation im Bereich des Wagenkastens erforderlich machen. Auch ist der Einsatz von durchgängigen Kabelkanälen unter dem Wagenmittelteil eines Doppelstock-Schienenfahrzeugs ohne weiteres möglich, was unter Umständen verhindert oder erschwert werden würde, wenn die Antennen zwischen den Drehgestellen des Doppelstock-Schienenfahrzeugs, also im mittleren tief liegenden Bereich des Wagenkastens, angeordnet werden würden.

Gemäß einer besonders bevorzugten Variante ist vorgesehen, dass zumindest eine Antenne unterhalb des Drehgestells angeordnet wird. Bevorzugt wird die Antenne dabei symmetrisch zur Drehachse des Drehgestells, beispielsweise unterhalb des Drehzapfens des Drehgestells, positioniert, denn so verbleibt die Antenne auch bei Kurvenfahrten stets über der Gleismitte, wodurch auch in Kurven eine zuverlässige Datenübertragung sichergestellt wird.

Im Falle einer Montage der Antenne unter dem Drehgestell wird eine Abhebesicherung des Drehgestells bevorzugt vor und hinter der Antenne angeordnet.

Für die Montage unter dem Drehgestell werden Antennen als bevorzugt angesehen, die Datensignale nach der Norm ETCS (ERMTS/ETCS UNISIG Class1) oder nach der Norm ETM (ETM S21M, Siemens Schweiz AG, Bestandteil des Systems EUROZUB P44) senden und empfangen können.

Im Hinblick auf einen möglichst universellen Einsatz des Schienenfahrzeugs wird es als vorteilhaft angesehen, wenn das Schienenfahrzeug mindestens eine weitere Antenne zum Senden und/oder Empfangen von Datensignalen mindestens einer weiteren Norm aufweist. Eine Mehrzahl an unterschiedlichen Antennen für unterschiedliche Übertragungsnormen ermöglicht es nämlich, das Schienenfahrzeug auch auf Streckenabschnitten zu betreiben, die mit unterschiedlichen Zugsicherungssystemen ausgestattet sind.

Beispielsweise wird eine weitere Antenne - in Vorwärtsfahrtrichtung gesehen - vor der bereits erwähnten Antenne angeordnet, und zwar unmittelbar oder mittelbar am Drehgestell oder befestigungsmäßig getrennt vom Drehgestell. Z. B. kann die weitere Antenne an einem vorderen Antennenträger des Drehgestells und/oder vor der vorderen Achse des Drehgestells, angebracht sein. Bevorzugt wird die weitere Antenne aber zwischen einem Schneeräumer oder Puffer des Schienenfahrzeugs und dem vorderen Drehgestell angebracht und dabei am Wagenkasten befestigt.

Gemäß einer bevorzugten Ausgestaltung des Schienenfahrzeugs ist die eine Antenne eine ETCS-kompatible Antenne und die weitere Antenne eine ETM-kompatible Antenne; wahlweise können die beiden Antennen auch vertauscht montiert sein: dies bedeutet, dass die vordere Antenne eine ETCS-kompatible Antenne und die am Drehgestell montierte Antenne eine ETM-kompatible Antenne ist.

Im Übrigen kann an dem Drehgestell auch ein Antennenträger angebracht sein. An diesem Antennenträger können beispielsweise eine oder mehrere zusätzliche Antennen angeordnet werden. Vorzugsweise ist der Antennenträger höhenverstellbar, um Montage- und/oder Herstellungstoleranzen sowie die Radreifenabnutzung ausgleichen und eine optimale Antennenausrichtung erreichen zu können.

Der Antennenträger wird bevorzugt in Fahrtrichtung gesehen hinter dem Drehzapfen des Drehgestells angeordnet. Besonders bevorzugt befindet sich der Antennenträger in Fahrtrichtung gesehen hinter dem hinteren Radsatz des Drehgestells. Mit anderen Worten befindet sich der Antennenträger also bevorzugt auf der dem Schneeschieber bzw. dem Puffer abgewandten Seite desjenigen Radsatzes, der von den beiden Radsätzen des Drehgestells vom dem Schneeschieber bzw. dem Puffer den größeren Abstand aufweist.

Als zusätzliche Antenne kann beispielsweise eine Integra (Signum Integra AG, 1928, punktförmiges Zugstoppsystem)-kompatible Antenne oder eine ZUB(ZUB 100- oder ZUB 200- Familie, Siemens Transportation System, Deutschland, punktförmiges Zugbeeinflussungssystem)-kompatible Antenne (z. B. ZUB262-kompatibel) am Antennenträger befestigt werden.

Im Hinblick auf möglichst universelle Einsatzmöglichkeiten des Schienenfahrzeugs wird es als vorteilhaft angesehen, wenn an dem Antennenträger zwei zusätzliche Antennen angebracht sind, beispielsweise eine Integra-kompatible Antenne und eine ZUB-kompatible Antenne.

Falls eine der zusätzlichen Antennen einen Empfangsmagneten und einen Permanentmagneten aufweist, so wird der Empfangsmagnet bevorzugt räumlich am Rand, vorzugsweise in Fahrtrichtung gesehen linken Rand, des Antennenträgers angeordnet; der Permanentmagnet wird bevorzugt räumlich zwischen dem Empfangsmagneten und der Längsachse des Drehgestells angebracht. Bei zwei zusätzlichen Antennen am Antennenträger wird die jeweils andere zusätzliche Antenne bevorzugt zwischen der Längsachse des Drehgestells und dem anderen Rand, vorzugsweise in Fahrtrichtung gesehen rechten Rand, des Antennenträgers montiert.

Wegen des tief liegenden Wagenbodens bei Doppelstock-Schienenfahrzeugen wird es als vorteilhaft angesehen, wenn die beschriebene Antennenpositionierung bei Doppelstock-Schienenfahrzeugen eingesetzt wird.

Um Doppelstock-Schienenfahrzeuge in Europa, beispielsweise auch in der Schweiz, möglichst universell einsetzen zu können, wird es als vorteilhaft angesehen, wenn mindestens vier unterschiedliche Antennensysteme vorhanden sind, nämlich eine ETCS-kompatible Antenne unter dem Drehzapfen des Drehgestells, eine ETM-kompatible Antenne zwischen dem Drehgestell und dem Schneeschieber/Puffer sowie eine Integra-kompatible Antenne und eine ZUB-kompatible Antenne jeweils an einem am vorderen Drehgestell montierten Antennenträger. Der Antennenträger ist dabei bevorzugt hinter dem hinteren Radsatz des vorderen Drehgestells angebracht.

Bei einem Doppelstock-Schienenfahrzeug mit vier unterschiedlichen Antennensystemen können die ETCS-kompatible Antenne und die ETM-kompatible Antenne alternativ auch vertauscht sein: dies bedeutet, dass die ETM-kompatible Antenne unter dem Drehzapfen des Drehgestells und die ETCS-kompatible Antenne zwischen dem Drehgestell und dem Schneeschieber/Puffer angeordnet wird.

Die eingangs bereits beschriebene Positionierung einer Antenne unter dem vorderen Drehgestell eines Schienenfahrzeugs wird im Übrigen auch als selbständige Erfindung angesehen. Als Erfindung wird somit also auch ein Schienenfahrzeug, insbesondere ein Doppelstock-Schienenfahrzeug, betrachtet, bei dem eine Antenne unter dem Drehgestell angebracht ist, und zwar unabhängig davon, wo etwaige andere Antennen des Schienenfahrzeugs positioniert sind. Als eine vorteilhafte Ausgestaltung dieser selbständigen Erfindung wird es angesehen, wenn die Antenne symmetrisch zur Drehachse des Drehgestells bzw. unterhalb des Drehzapfens des Drehgestells angeordnet ist. Bezüglich weiterer vorteilhafter Ausgestaltungen dieser selbstständigen Erfindung sei auf die obigen Ausführungen verwiesen. Wie bereits erwähnt, kommt es bei der erläuterten selbständigen Erfindung nicht auf die Position anderer Antennen im oder am Schienenfahrzeug an.

Die Erfindung wird nachfolgend beispielhaft erläutert. Figuren 1 bis 3 zeigen ein Ausführungsbeispiel der Erfindung; dabei zeigen
- Figur 1: ein Ausführungsbeispiel eines erfindungsgemäßen Doppelstocktriebfahrzeugs mit insgesamt vier unterschiedlichen Antennensystemen,
- Figur 2: die Anordnung einer Antenne unter einem Drehgestell des Doppelstocktriebfahrzeugs gemäß Figur 1 im Detail und
- Figur 3: die Anordnung einer zusätzlichen Antenne an einem Antennenträger des Drehgestells gemäß Figur 2 im Detail.

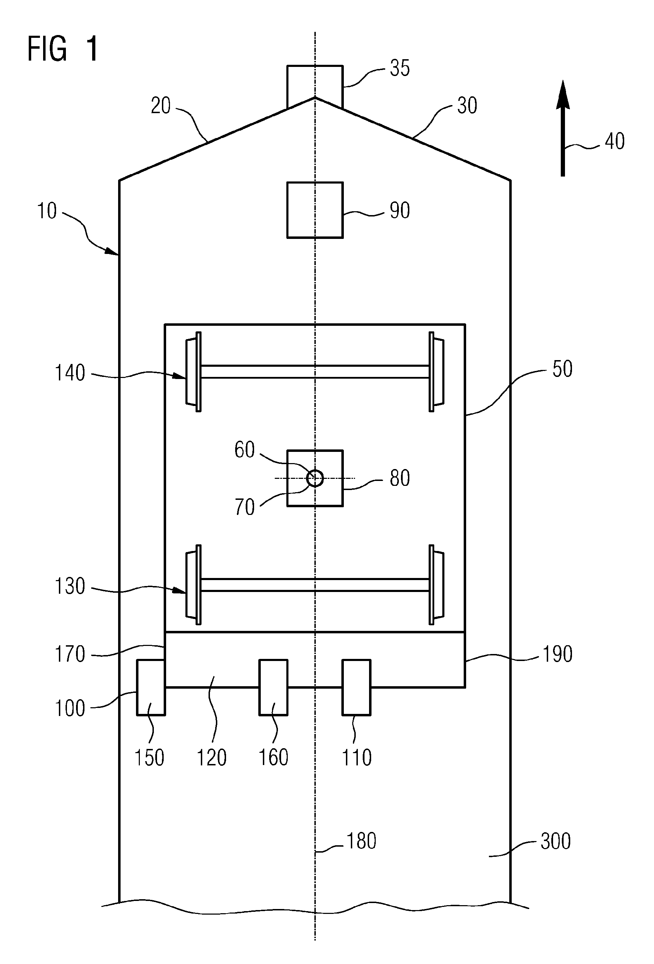

In der Figur 1 erkennt man von oben gesehen ein Doppelstocktriebfahrzeug 10, an dessen Frontseite bzw. Vorderseite 20 ein Schneeräumer 30 und ein Puffer 35 angeordnet sind. Der Schneeräumer 30 befindet sich also in Vorwärtsfahrtrichtung 40 gesehen vorne am Doppelstocktriebfahrzeug.

In der Figur 1 erkennt man darüber hinaus ein vorderes Drehgestell 50 des Doppelstocktriebfahrzeugs 10. Das Drehgestell 50 ist um eine Drehachse 60, die durch einen Drehzapfen 70 des Drehgestells 50 gebildet ist, drehbar gelagert.

Die Figur 1 zeigt außerdem vier Zugsicherungsantennen bzw. Antennensysteme, die nach unterschiedlichen Normen bzw. Übertragungsstandards arbeiten. Dies bedeutet, dass jede der Antennen nach ihrer jeweiligen Norm Datensignale an eine streckenseitige Einrichtung senden und/oder von einer solchen streckenseitigen Einrichtung empfangen kann. Die vier unterschiedlichen Antennen sind in der Figur 1 mit den Bezugszeichen 80, 90, 100 und 110 gekennzeichnet.

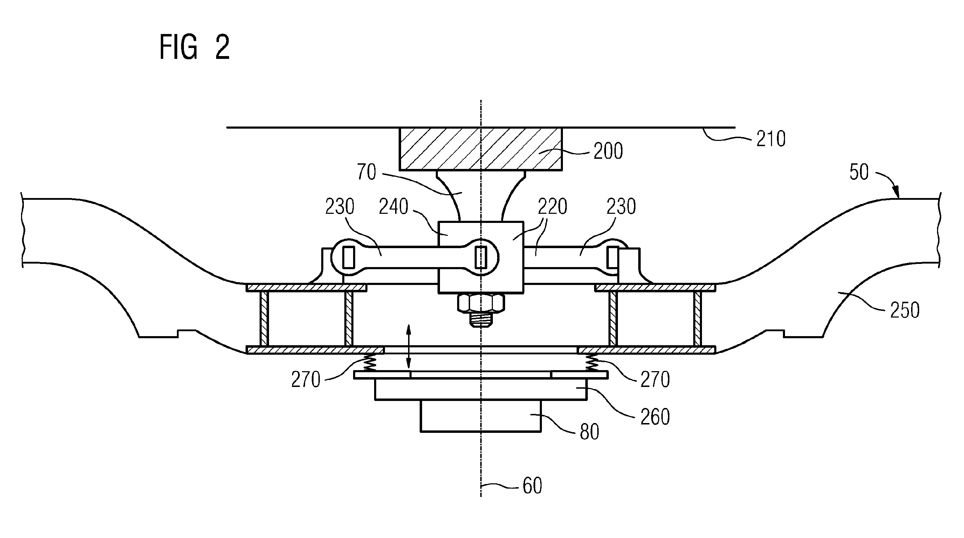

Eine der Antennen, die mit dem Bezugszeichen 80 gekennzeichnet ist, ist unterhalb des Drehzapfens 70 des vorderen Drehgestells 50 angebracht; die genaue Positionierung dieser Antenne 80 wird im Zusammenhang mit der Figur 2 weiter unten näher erläutert.

Eine weitere Antenne, die mit dem Bezugszeichen 90 gekennzeichnet ist, befindet sich im vorderen Teil des Doppelstocktriebfahrzeugs 10, nämlich zwischen dem vorderen Drehgestell 50 und der Frontseite 20 bzw. dem Schneeräumer 30 und ist am Wagenkasten befestigt.

Bei der einen Antenne 80 kann es sich beispielsweise um eine ETCS-kompatible Antenne oder um eine ETM-kompatible Antenne handeln. Arbeitet die eine Antenne 80 beispielsweise nach der Norm ETCS, so wird als weitere Antenne 90 vorzugsweise eine ETM-kompatible Antenne eingesetzt. Entsprechend umgekehrt wird für den Fall, dass die eine Antenne 80 nach der ETM-Norm arbeitet, für die weitere Antenne 90 der ETCS-Standard gewählt.

Die ETCS-kompatible Antenne 80 bildet einen Bestandteil eines ETCS-Sende- und Empfangssystems des Schienenfahrzeugs 10; in entsprechender Weise bildet die ETM-kompatible Antenne 90 einen Bestandteil eines ETM-Sende- und Empfangssystems des Schienenfahrzeugs 10.

Die ETCS-kompatible Antenne 80 weist unabhängig davon, ob sie unter dem Drehgestell 50 oder zwischen dem Drehgestell 50 und der Frontseite 20 bzw. dem Schneeräumer 30 angeordnet ist, vorzugsweise einen Abstand zwischen 2,5 m und 12 m vom Puffer 35 auf. Die ETM-kompatible Antenne 90 ist vorzugsweise in einem Abstand zwischen 1 m und 12,5 m vom Puffer 35 angeordnet. Zwischen der ETCS-kompatiblen Antenne 80 und der ETMkompatiblen Antenne 90 wird vorzugsweise ein Abstand zwischen 2,5 m und 4,0 m eingehalten.

In der Figur 1 kann man darüber hinaus einen Antennenträger 120 erkennen, der in Fahrtrichtung 40 gesehen hinter den beiden Radsätzen 130 und 140 des Drehgestells 50 angebracht ist. An dem Antennenträger 120 sind die beiden zusätzlichen Antennen 100 und 110 befestigt. Beispielsweise handelt es sich bei der einen zusätzlichen Antenne 100 um eine Integra-kompatible Antenne. Die Integra-kompatible Antenne 100 bildet einen Bestandteil eines Integra-Sende- und Empfangssystems des Schienenfahrzeugs 10.

Die Integra-kompatible Antenne 100 weist einen Empfangsmagneten 150 sowie einen Permanentmagneten 160 auf. Der Empfangsmagnet 150 ist am linken Rand 170 des Antennenträgers 120 angeordnet. Der Permanentmagnet 160 befindet sich zwischen dem linken Rand 170 und einer Längsachse 180 des Antennenträgers 120.

Die Integra-kompatible Antenne 100 ist vorzugsweise in einem Abstand zwischen 2,0 m und 12 m vom Puffer 35 angeordnet.

Zwischen der Längsachse 180 des Antennenträgers 120 und dem in Fahrtrichtung gesehen rechten Rand 190 des Antennenträgers 120 befindet sich die andere zusätzliche Antenne 110, bei der es sich beispielsweise um eine ZUB-kompatible Antenne handelt. Die ZUB-kompatible Antenne 110 bildet einen Bestandteil eines ZUB-Sende- und Empfangssystems des Schienenfahrzeugs 10. Die ZUB-kompatible Antenne 110 ist vorzugsweise in einem Abstand zwischen 1 m und 12 m vom Puffer angeordnet.

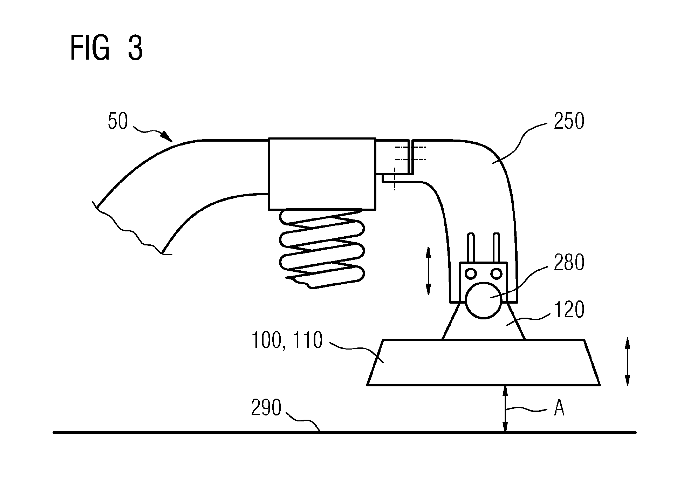

Die Anordnung der beiden zusätzlichen Antennen 100 und 110 am Antennenträger 120 ist näher in der Figur 3 gezeigt und wird im Zusammenhang mit dieser Figur 3 weiter unten näher erläutert.

In der Figur 2 erkennt man das Drehgestell 50 des Doppelstocktriebfahrzeuges 10 im Querschnitt im Detail. Es ist ersichtlich, dass eine Traverse 200 an einem Wagenkasten 210 des Doppelstocktriebfahrzeuges 10 angebracht ist. Mit der Traverse 200 steht der bereits in Figur 1 gezeigte Drehzapfen 70 in Verbindung, dessen Mittelachse die Drehachse 60 des Drehgestells 50 bildet. Das Drehgestell 50 ist über eine Längsmitnahmeeinrichtung 220 mit dem Drehzapfen 70 verbunden. Diese Längsmitnahmeeinrichtung 220 weist u. a. zwei Längsstangen 230 auf, die an einem mit dem Drehzapfen 70 in Verbindung stehenden Drehelement 240 befestigt sind.

Die Figur 2 zeigt darüber hinaus, dass an einem Drehgestellrahmen 250 des Drehgestells 50 ein weiterer Antennenträger angebracht, beispielsweise angeschweißt, ist. Dieser weitere Antennenträger ist in der Figur 2 mit dem Bezugszeichen 260 gekennzeichnet. Unten an diesem weiteren Antennenträger 260 ist die bereits im Zusammenhang mit der Figur 1 erwähnte ETCS-kompatible Antenne 80 angebracht. Die Anordnung der ETCS-kompatiblen Antenne 80 erfolgt vorzugsweise relativ zur Drehachse 60 mittig, so dass die Antenne 80 auch bei Kurvenfahrten bzw. einer Drehbewegung des Drehgestells 50 stets mittig über dem Gleisbett ausgerichtet bleibt. Die Antenne 80 kann auch unmittelbar, d. h. ohne Antennenträger 260, am Drehgestellrahmen 250 angebracht sein.

In der Figur 2 sind darüber hinaus Federeinrichtungen 270 erkennbar, die am Drehgestellrahmen 250 an der Schnittstelle zum weiteren Antennenträger 260 angebracht sein können. Diese Federeinrichtungen 270 ermöglichen ein Ein- und Ausfedern des weiteren Antennenträgers 260 und damit einhergehend auch eine entsprechende Federbewegung der ETCS-Antenne 80.

In der Figur 3 ist der Antennenträger 120 gemäß Figur 1 in einer Seitenansicht im Detail gezeigt. Der Antennenträger 120 ist mittels einer Höhenverstelleinrichtung 280 höhenverstellbar am Drehgestellrahmen 250 des Drehgestells 50 angeordnet. Aufgrund der Höhenverstellbarkeit des Antennenträgers 120 lässt sich der Abstand A der am Antennenträger befestigten Antennen 100 und 110 relativ zum Gleisbett 290 einstellen. Die Höhenverstelleinrichtung 280 ermöglicht somit den Ausgleich von Herstellungs- und Montagetoleranzen sowie auch einen nachfolgenden Ausgleich eines beim Betrieb des Doppelstocktriebfahrzeuges 10 auftretenden Radverschleißes.

Bei dem in den Figuren 1 bis 3 gezeigten Ausführungsbeispiel sind alle vier Antennensysteme 80, 90, 100 und 110 normgerecht bzw. zulassungstechnisch konform positioniert, ohne dass der mittlere Bereich des Wagenkastens 210 einbezogen ist. Dies ermöglicht eine große Stehhöhe für die Passagiere im Wagenkasten 210 des Doppelstocktriebfahrzeugs 10. Außerdem behält der Wagenkasten 210 seine einfache, leichte und stabile Konstruktion bei. Darüber hinaus ist der Einsatz von durchgängigen Kabelkanälen unter dem Wagenmittelteil 300 (vgl. Figur 1) des Doppelstocktriebfahrzeugs 10 möglich, was verhindert oder erschwert werden würde, wenn die Antennen zwischen den Drehgestellen des Doppelstocktriebfahrzeugs 10, also im mittleren Bereich 300 des Wagenkastens 210, angeordnet wären.

## Patentansprüche

1. Schienenfahrzeug (10) mit zumindest einer Antenne zum Senden von Datensignalen einer vorgegebenen Norm an eine Streckeneinrichtung und/oder zum Empfangen von Datensignalen einer vorgegebenen Norm von einer Streckeneinrichtung, wobei das Schienenfahrzeug mindestens ein Drehgestell (50) aufweist, **dadurch gekennzeichnet, dass** alle Antennen (80, 90, 100, 110) des Schienenfahrzeugs (10) am und/oder vor dem vorderen Drehgestell (50) angeordnet sind.

2. Schienenfahrzeug nach Anspruch 1, **dadurch gekennzeichnet, dass** zumindest eine Antenne (80) unten am Drehgestell (50) angeordnet ist.

3. Schienenfahrzeug nach Anspruch 2, **dadurch gekennzeichnet, dass** die zumindest eine Antenne (80) symmetrisch zur Drehachse (60) des Drehgestells (50) angeordnet ist.

4. Schienenfahrzeug nach Anspruch 3, **dadurch gekennzeichnet, dass** die zumindest eine Antenne (80) derart ausgestaltet ist, dass sie Datensignale nach der Norm ETCS oder nach der Norm ETM senden und empfangen kann.

5. Schienenfahrzeug nach einem der voranstehenden Ansprüche, **dadurch gekennzeichnet, dass** das Schienenfahrzeug eine weitere Antenne (90) zum Senden und/oder Empfangen von Datensignalen einer weiteren Norm aufweist.

6. Schienenfahrzeug nach Anspruch 5, **dadurch gekennzeichnet, dass** die weitere Antenne (90) vor der einen Antenne (80) angeordnet ist, und zwar unmittelbar oder mittelbar am Drehgestell oder befestigungsmäßig getrennt vom Drehgestell (50).

7. Schienenfahrzeug nach Anspruch 6, **dadurch gekennzeichnet, dass** die weitere Antenne (90) zwischen einem Schneeräumer (30) oder einem Puffer (35) des Schienenfahrzeugs und dem Drehgestell (50) angeordnet ist.

8. Schienenfahrzeug nach einem der voranstehenden Ansprüche, **dadurch gekennzeichnet, dass** an dem Drehgestell ein Antennenträger (120) angeordnet ist und dass eine oder mehrere zusätzliche Antennen (100, 110) an dem Antennenträger angebracht sind.

9. Schienenfahrzeug nach Anspruch 8, **dadurch gekennzeichnet, dass** der Antennenträger (120) in Fahrtrichtung (40) gesehen hinter der Drehachse (60) des Drehgestells (50) angeordnet ist.

10. Schienenfahrzeug nach Anspruch 8 oder 9, **dadurch gekennzeichnet, dass** an dem Antennenträger zwei zusätzliche Antennen (100, 110) angebracht sind.

11. Schienenfahrzeug nach Anspruch 10, **dadurch gekennzeichnet, dass** die eine zusätzliche Antenne (100) einen Empfangsmagneten (150) aufweist, der räumlich am Rand (170), vorzugsweise in Vorwärtsfahrtrichtung gesehen linken Rand, des Antennenträgers angeordnet ist, und dass die eine zusätzliche Antenne (100) außerdem einen Permanentmagneten (160) aufweist, der vorzugsweise räumlich zwischen dem Empfangsmagneten (150) und der Längsachse (180) des Drehgestells (50) angeordnet ist.

12. Schienenfahrzeug nach Anspruch 11, **dadurch gekennzeichnet, dass** die andere zusätzliche Antenne (110) zwischen der Längsachse (180) des Drehgestells und dem anderen Rand (190), vorzugsweise in Vorwärtsfahrtrichtung gesehen rechten Rand, des Antennenträgers angeordnet ist.

13. Schienenfahrzeug nach einem der voranstehenden Ansprüche 10 bis 12, **dadurch gekennzeichnet, dass** die eine zusätzliche Antenne (100) eine Integra-kompatible Antenne und die andere zusätzliche Antenne (110) eine ZUB-kompatible Antenne ist.

14. Schienenfahrzeug nach einem der voranstehenden Ansprüche, **dadurch gekennzeichnet, dass** das Schienenfahrzeug ein Doppelstock-Schienenfahrzeug ist.
